# EUROPEAN PATENT SPECIFICATION

(11) **EP 2 891 537 B1**
(45) Date of publication and mention of the grant of the patent: **28.12.2016**
(21) Application number: 12883858.8
(22) Date of filing: 31.08.2012
(51) Int. Cl.: B23K 13/06, B23K 11/00

(54) **METHOD FOR PRODUCING PLASMA-SHIELDED ELECTRIC RESISTANCE WELDED STEEL PIPE**
VERFAHREN ZUR HERSTELLUNG EINES PLASMAABGESCHIRMTEN WIDERSTANDSGESCHWEISSTEN STAHLROHRS
PROCÉDÉ POUR PRODUIRE UN TUBE D'ACIER SOUDÉ PAR RÉSISTANCE ÉLECTRIQUE PROTÉGÉ PAR UN PLASMA

(43) Date of publication of application: 08.07.2015
(73) Proprietor: Nippon Steel & Sumitomo Metal Corporation, Tokyo 100-8071 (JP)
(72) Inventor: HAMATANI, Hideki, Tokyo 100-8071 (JP); WATANABE, Fuminori, Tokyo 100-8071 (JP); TSUKAKOSHI, Kazumoto, Tokyo 100-8071 (JP); MIZUHASHI, Nobuo, Tokyo 100-8071 (JP); ASANO, Takuya, Tokyo 100-8071 (JP); MIURA, Takao, Tokyo 100-8071 (JP); MOTOYOSHI, Takashi, Tokyo 100-8071 (JP); YAMAMOTO, Kazuto, Tokyo 100-8071 (JP); TANAKA, Kimiharu, Tokyo 100-8071 (JP)
(74) Representative: Vossius & Partner Patentanwälte Rechtsanwälte mbB
(86) International application number: PCT/JP2012/072250
(87) International publication number: WO 2014/033931

(56) References cited:
- JP-A- H0 523 867
- JP-A- 2004 298 961
- JP-A- 2005 230 909
- JP-A- 2006 026 691
- JP-A- 2010 105 045

## Description

### Technical Field

The present invention relates to a method for producing electric resistance welded steel pipe which forms steel sheet into a tubular shape and welds its butt end faces to obtain steel pipe.

### Background Art

In general, electric resistance welded steel pipe is produced by forming a strip coil which is comprised of steel sheet into a tubular shape using continuously a large number of roll sets, heating this tubular shaped steel sheet by induction heating by a workcoil or by directly ohmic heating by a contact tip, heating and melting the end parts of the steel sheet at a predetermined temperature, and pressing and welding (electric resistance welding) them by squeeze rolls. In the past, when welding steel sheet which contains an element which easily forms an oxide (Cr, Al, Ti, Si, etc.) to produce electric resistance welded steel pipe, weld defects due to oxides called "penetrators" often form at the weld part. If such penetrators form, they become causes of a drop in the toughness value (in particular, the low temperature toughness value), corrosion resistance, and cold workability.

As a countermeasure for this, it has been reported that, at the time of electric resistance welding, it is possible to treat the butt end faces of the steel sheet by blowing a 1400°C or higher reducing high temperature combustion flame or nonoxidizing high temperature plasma at a predetermined flow rate so as to decrease the oxides and further discharge the oxides (PLT 1). Plasma-shielded welding which uses so-called nonoxidizing plasma for shielding the weld part has been disclosed.

However, even with simple plasma-shielded welding, if the plasma is turbulent, it easily sweeps up oxygen in the atmosphere resulting in the effect of suppression of penetrators remarkably deteriorating. For this reason, a cascade type plasma gun (also called a "plasma torch") which forms laminar plasma has been proposed (PLT 2). A cascade type plasma gun is a plasma gun which applies voltage between a cathode and anode to generate plasma, further blows anode gas to it to form plasma, and blows the result.

Further, to make the atmosphere in the plasma a reducing atmosphere, plasma working gas in which hydrogen (H₂) is mixed has been proposed (PLT's 1 and 2). Hydrogen (H₂) has the effect of increasing the weld heat input due to the action in increasing the thermal conductivity (PLT 2).

Furthermore, the inventors engaged in intensive efforts to develop a plasma gun which can easily form laminar plasma. As a result, the inter-electrode inserts between the cathode and anode, that is, the cascades, are made to have inner shapes which become larger in diameter in stages to thereby obtain long laminar plasma (PLT 3).

Regarding the plasma working gas, as explained above, in conventional plasma-shielded welding, a nonoxidizing (or reducing) atmosphere is obtained, the thermal conductivity becomes larger, and the amount of heat input is increased, so it has been proposed to include hydrogen (H₂) in the plasma working gas and that to obtain this effect, inclusion of 2 vol% or more is necessary (PLT 2). On the other hand, hydrogen obstructs the stability of plasma. That is, if increasing the hydrogen content, it easily becomes turbulent. For this reason, it is proposed that the hydrogen content in the plasma working gas be made 40% or less (PLT 1) or 50% or less (PLT 2).

Further, for the plasma working gas, it has also been proposed to add nitrogen (N₂) or helium (He) in addition to hydrogen (H₂) to improve the thermal conductivity. In this case, to secure stability of the plasma, it has been proposed to make the Ar content 50 vol% or more and make the nitrogen (N₂) and helium (He) less than 50% (PLTs 1 and 2).

### Citations List

### Patent Literature

PLT 1: Japanese Patent Publication No. 2004-298961A
PLT 2: WO2008-108450A
PLT 3: PCT/RU2011/000109

### Summary of Invention

### Technical Problem

At the present time, seamless steel pipe and other high quality steel pipe is being used for line pipe or oil well pipe and automotive steel pipe, but from the cost perspective and the perspective of the ease of production, the demand for electric resistance welded steel pipe has been rising as an alternative. For this purpose, further reduction of defects such as penetrators is being sought. Therefore, the inventors reevaluated plasma working gas so as to further improve the effect of reduction of defects in electric resistance welded steel pipe formed by plasma-shielded welding. In particular, they took note of hydrogen which has a strong effect on the plasma properties. It is known that hydrogen not only has a nonoxidizing (reducing) effect, but also has a large thermal conductivity, so if the plasma working gas contains hydrogen, it acts as an auxiliary heat source. For this reason, the total amount of heat input at the time of electric resistance welding shifts to the low input side as an effect of addition of hydrogen.

On the other hand, due to fluctuations in the working conditions at the time of production of electric resistance welded steel pipe, for example, rolling of the welded material etc., sometimes the weld part shifts from the plasma and therefore the shielding effect can no longer be obtained. This being so, the electric resistance welding is performed in a state with no shield (unshielded state), so the defects in the weld part remarkably increase. Due to the effect of the addition of hydrogen as an auxiliary heat source, the weld heat input shifts to the lower heat input, so defects specific to insufficient heat input occur and the amount of increase of defects increases by nearly 100-fold. Fluctuations in operation in the production of electric resistance welded steel pipe cannot be avoided, so to obtain high quality electric resistance welded steel pipe, a weld method with high ability to adapt to such fluctuations in operation, that is, a stable shielding method, has been sought.

Further, it was learned that even if shielding by plasma, the unstable (turbulent-prone) tail flame is used for the shielding, so oxygen in the atmosphere is easily swept up and leads to an increase in oxide defects.

On the other hand, Ar, which used to be the main gas component of conventional plasma working gas, has the effect of improving the plasma stability, but is a rare gas, so is expensive. Demands for cutting the cost of plasma working gas are becoming stronger.

From the above, the invention has as its object fundamentally reevaluating the components of plasma working gas of plasma-shielded welding and providing a plasma-shielded welding method for further reducing the number of defects. In particular, it has as its object reevaluating the effects of addition of hydrogen in plasma working gas and obtaining the optimal gas composition.

### Solution to Problem

The inventors etc. took note of and analyzed the regions of no addition of hydrogen or addition of a fine amount for eliminating the detrimental effect of hydrogen on the stability of plasma. They discovered that while it had conventionally been thought that there was no effect of addition of hydrogen with 2% or less of hydrogen, rather there were the following advantages due to not adding hydrogen. Note that, the content of the hydrogen etc. in the gas is displayed simply as "%", but unless otherwise indicated, this indicates "vol%".

### (a) No Addition of Hydrogen or Addition of Fine Amount to Reduce Defects

In Ar-N₂-H₂-based plasma working gas, hydrogen acts as an auxiliary heat source since it has a large thermal conductivity. The suitable electric resistance welding heat input level where the number of defects becomes minimal shifts to the lower input. On the other hand, with a plasma shield using an Ar-N₂-based plasma working gas to which hydrogen is not added, the suitable amount of heat input becomes larger than the case of adding hydrogen. The inventors confirmed that the number of defects at the suitable amount of heat input was not too different from the number of defects in the case of adding hydrogen. Further, they confirmed that the suitable amount of heat input in welding with no shield was of the same level as the level of heat input in the case of using Ar-N₂-based gas with no addition of hydrogen. For this reason, they discovered that even when disturbances during operation of the electric resistance welded steel pipe cause the shield to shift from the weld part and result in an unshielded state, the increase in the number of defects becomes smaller compared with the Ar-N₂-H₂ system with the addition of hydrogen. Furthermore, they discovered that if increasing the amount of addition of hydrogen, the suitable amount of heat input for electrical resistance welding shifts to the lower heat amount, so to match with the suitable amount of heat input in the unshielded state, it is possible to adjust the suitable amount of heat input by adding a fine amount of hydrogen. From experiments, the inventors discovered that by adding hydrogen in an amount of 1% or less, it is possible to suppress to a minimum the increase in the number of defects when disturbances in operation result in the unshielded state.

### (b) Stabilization of Plasma by Non-addition or Addition of Fine Amount of Hydrogen

As explained above, hydrogen obstructs stabilization of plasma. In the past, if 50% or less, it was considered that the plasma would not be affected as much. However, the inventors etc. analyzed in detail the effects of addition of hydrogen and discovered that if not adding hydrogen (H₂), the stability of the plasma would be remarkably improved and the laminar flame of the laminar flow would become longer. In particular, in the region of addition of a fine amount of hydrogen (0 to 1%), this effect is large. If the H₂ content exceeds 1%, the plasma remarkably degrades and the flame length becomes shorter. With the recent longer flame laminar plasma, this degradation becomes a problem. Therefore, the inventors discovered that to obtain stable plasma, overturning the conventional thinking of persons skilled in the art, the gas system should be made to be a system which does not contain H₂ or even if containing it, is restricted to 1%.

### (c) Reduction in Noise Level Due to Reduction of Amount of Addition of Hydrogen

The inventors discovered that in an Ar-N₂-H₂-based plasma working gas, if the amount of addition of hydrogen is decreased, the noise level also falls. In particular, the inventors discovered that if the amount of addition of hydrogen is 1% or less, the noise level abruptly drops (80 dB or less). This causes a remarkable improvement in the work environment.

### (d) Improvement of Plasma Gun Life Due to Reduction of Amount of Addition of Hydrogen

In Ar-N₂-H₂-based plasma working gas, as explained above, since hydrogen has a large thermal conductivity, the thermal load which is received by the plasma gun which the plasma working gas touches increases in accordance with the increase in the amount of addition of hydrogen. This leads to a drop in lifetime of the plasma gun. Conversely, the inventors discovered that if decreasing the amount of addition of hydrogen, the thermal load of the plasma gun decreases and leads to extension of the lifetime of the plasma gun. The present invention was made based on the above discoveries and is defined in the appended set of claims.

### Advantageous Effects of Invention

According to the present invention, it is possible to obtain electric resistance welded steel pipe with few defects without greatly changing the current welding conditions. Further, due to the effect of stabilization of plasma, there are the effects that the adaptability to rolling the steel pipe which is welded during the operation etc. is good and the overall quality of the electric resistance welded steel pipe is improved (number of defects is reduced). As secondary effects of the present invention, it is possible to reduce the noise level and obtain an effect of extension of the lifetime of the plasma gun and other equipment.

### Brief Description of Drawings

FIG. 1 is a view which shows the relationship between the amount of electric resistance welding heat input and the area ratio of the defects. (a) is a view which shows a comparison of the conventional Ar-N₂-H₂-based plasma working gas and the case of no shield. (b) is a view which shows a comparison of conventional Ar-N₂-H₂-based gas, Ar-N₂-based gas according to the present invention, and the case of no shield.
FIG. 2 is a view which shows the relationship of the amount of addition of hydrogen in the plasma working gas and flame length.
FIG. 3 is a view which shows the relationship of the amount of addition of hydrogen in the plasma working gas and a noise level of a plasma gun.

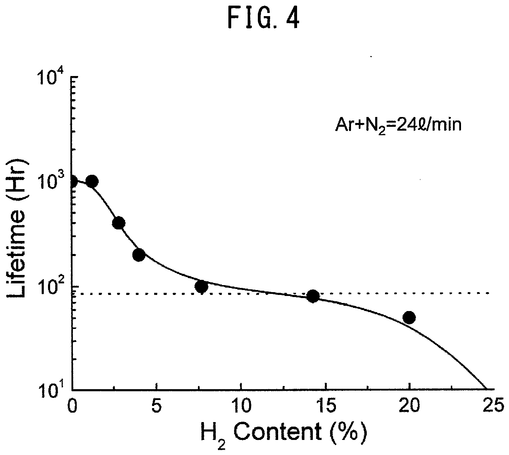

FIG. 4 is a view which shows the relationship of the amount of addition of hydrogen in the plasma working gas and a lifetime of a plasma gun.
FIG. 5 is a conceptual view of an apparatus for producing electric resistance welded steel pipe. (a) indicates a side view, while (b) indicates a vertical view.
FIG. 6 is a conceptual view of a cascade type plasma gun.

### Description of Embodiments

Below, the present invention will be explained in detail based on embodiments. When reevaluating the plasma working gas, the inventors primarily evaluated the effects of addition of hydrogen. Hydrogen has not only a nonoxidizing action (reducing action), but also an effect of increasing the welding heat input due to the auxiliary heat source action. In contrast, the hydrogen has also an effect of destabilizing the plasma. In the plasma shield, stabilization of plasma is important, so the inventors took note of the hydrogen which has the detrimental effect on plasma.

### Apparatus for Producing Electric Resistance Welded Steel Pipe

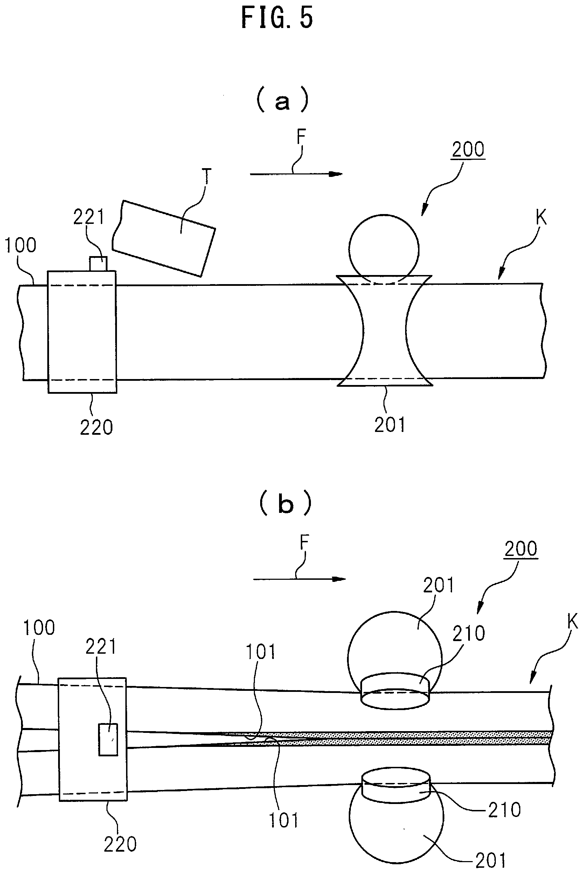

First, an apparatus for producing electric resistance welded steel pipe will be explained using FIG. 5. The electric resistance welded steel pipe is steel pipe which is continuously produced by forming steel sheet into a tubular shape and welding the butt end faces. There are various methods and apparatuses for producing electric resistance welded steel pipe, but in the present invention, the method and apparatus are not particularly limited. In the present application, an apparatus for producing the electric resistance welded steel pipe of FIG. 5 will be explained as an example.

FIG. 5(a) is a schematic side view which explains the process for producing the electric resistance welded steel pipe K by an electric resistance welded steel pipe welding apparatus 200. FIG. 5(b) is a schematic view of FIG. 5(a) seen from above. When producing the electric resistance welded steel pipe K, first, for example, thickness 1 to 22 mm or so steel sheet 100 is continuously transported toward the direction F while using a large number of forming rolls (not shown) and formed into a tubular shape (not shown). A workcoil 220 straddles the butt end faces 101 and electrified from the workcoil 220 to thereby heat the butt end faces and squeeze rolls 201 are used to apply a load to hot press bond the butt end faces 101 to weld them and thereby continuously produce electric resistance welded steel pipe K. Reference numerals 210 indicate top rolls. At this time, the plasma which is generated by the plasma gun T is used to form a plasma shield so that the surrounding air is not swept up at the butt end faces 101 forming the weld part. The arrangement of the plasma gun T is carefully adjusted and determined so that the plasma accurately seals the weld part. Note that, 221 indicates an air knife which has the effect of cutting the inflow of water from upstream in the pipemaking process to the neighborhood of the weld part.

### Plasma Gun

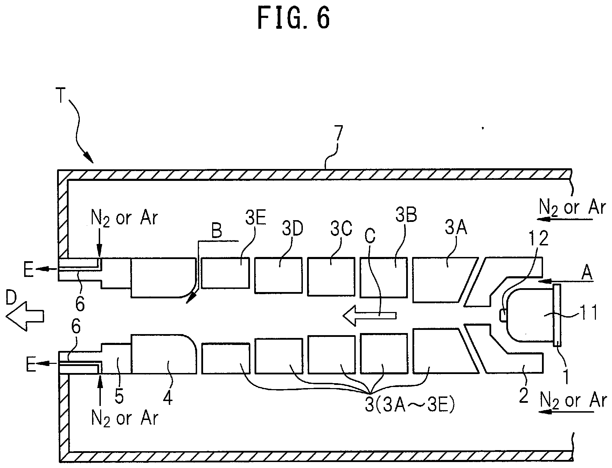

Next, the plasma gun which produces the plasma will be explained using FIG. 6. In recent plasma-shielded welding, shielding has been realized using longer plasma lengths and laminar flows of plasma. A shield using laminar plasma suppresses penetrators and other defects since there is little interfusion of air at the weld part. Further, if the plasma length is long, it is possible to set the plasma gun at a location separated from the weld part. This is advantageous in terms of the installation space. On the other hand, it is not simple to stably obtain long laminar plasma. The inventors etc. developed a plasma gun which is able to stably obtain laminar plasma with a long plasma length (PLT 3). FIG. 6 is a schematic view of the structure of the plasma gun which is disclosed in PLT 3. According to this plasma gun, it is possible to stably obtain laminar plasma of a long plasma length. In the present application, the explanation will be given using plasma generated by this plasma gun as an example. Note that, the present invention is not limited to plasma by this plasma gun. This is because due to the nature of plasma, the type of plasma gun is not particularly an issue.

Further, this FIG. 6 shows principal parts of the plasma gun T (below, sometimes simply called "plasma gun"). This plasma gun is a cascade type plasma gun which is comprised of a cascade 3 arranged between a cathode 1 and an anode 4. This plasma gun introduces cathode gas A into the inside of the cascade 3, applies voltage between the cathode 1 and the anode 4 to form the plasma C, and further sprays the formed plasma C with anode gas B, and also converts the anode gas B to plasma to obtain predetermined plasma D.

The cathode 1 of the plasma gun T is comprised of a main body 11 made of copper which has a water-cooled structure and a rod-shaped tungsten cathode 12 which is inserted into the main body 11. Further, the cathode 1 and cascade 3 (3A to 3E in FIG. 5 together being called the "cascade 3") of the plasma gun T and the cathode 1 and the anode 4 are electrically insulated. Further, between the cathode 1 and cascade 3, a pilot member 2 which has a water-cooling structure is provided. The cascade 3 is comprised of a plurality of members (members 3A to 3E in FIG. 5) which are arranged between the pilot member 2 and the anode 4 so that their inside diameters increase toward the anode 4 in multiple stages, and which are electrically insulated from each other. The anode 4 is a copper member which has a water-cooling structure. Furthermore, at the back of the anode 4, an ejection nozzle 5 which increases in inside diameter in stages or continuously (in FIG. 6, increases in inside diameter in stages) and which has a water-cooled structre is arranged. At the ejection nozzle 5, a side shield module 6 which blows N₂ or Ar gas (E: side shield gas) so as to surround the plasma so as to cut off diffusion of oxygen to the plasma D which is finally ejected is provided. The higher the flow rate of this side shield gas in the range which does not disturb the plasma, the higher the effect of suppression of diffusion.

In the present application, an embodiment using a plasma gun giving a plasma diameter of 18 mm and a plasma length of a rated 200 mm to 300 mm in an N₂-Ar-H₂-based plasma working gas will be explained as an example. Note that, the present invention is not limited in the method of generation of plasma, the type of the plasma gun, etc. This is because the inventors focused on the differences in properties of the plasma due to differences in composition of the plasma working gas.

### Manufacturing Conditions of Electric Resistance Welded Steel Pipe

Steel sheet: The composition of the steel sheet which is used for the explanation of the present invention will be shown in Table 1, while the manufacturing conditions of the electric resistance welded steel pipe will be shown below:
Steel sheet thickness: 11.0 mm
Diameter of electric resistance welded steel pipe: outside diameter of 168.3 mm (φ168.3)
Pipe-making speed: 15 m/min (Vm=9.0 m/min, V-angle 5°)

For the working conditions, from the experience of the inventors, typical conditions in the manufacture of electric resistance welded steel pipe were selected. Note that, the present invention is not limited in composition of the steel sheet, sheet thickness, and other steel sheet properties, diameter of the electric resistance welded steel pipe, pipe manufacturing speed, and other properties and aspects of the method of manufacture of electric resistance welded steel pipe. This is because it is possible to independently evaluate the factors relating to the manufacturing conditions relating to steel sheet and electric resistance welded steel pipe and the factors due to the plasma, in particular the plasma working gas.

**Table 1. Composition of Steel Sheet (mass%)**

| C | Si | Mn | P | S | Al | Nb | V | Ti |
|---|---|---|---|---|---|---|---|---|
| 0.048 | 0.214 | 0.97 | 0.0072 | 0.0006 | 0.024 | 0.047 | 0.034 | 0.015 |

### Plasma Working Gas

The present invention fundamentally reevaluates the composition of the plasma working gas and in particular investigates the effects of hydrogen to obtain new discoveries. For the base plasma working gas, as explained later, Ar-N₂-H₂gas mainly comprised of nitrogen (N₂) was used. The gas composition (gas composition (%) indicates vol% unless particularly indicated otherwise, same below) is made Ar: 20% and N₂: 80% as the standard gas. If viewing the effect of addition of H₂, in this standard gas, when fixing Ar to 20% and adding amounts of addition of H₂ of 0.5%, 1%, 2%, 3%, 4%, and 14%, the N₂ was decreased to 79.5%, 79%, 78%, 77%, and 66%. Further, as the non-H₂ added gas, in addition to the standard gas (Ar:N₂=20%:80%), Ar:N₂=40%:60%, Ar:N₂=30%:70%, Ar:N₂=10%:90%, and Ar:N₂=5%:95% were used, while as the conventional gas, Ar:N₂=55%:45% was used. Regarding the conventional gas, both PLT's 1 and 2 propose Ar-N₂-based gas, but there are not working examples. The optimal ratio of composition was also not disclosed, but the ratio of composition was set in the proposed specifications. Unless particularly indicated otherwise, when describing "Ar-N₂gas", a standard gas of 20%Ar-80%N₂ is indicated, while when describing "Ar-N₂-H₂gas", a gas based on the standard gas but changed in amount of addition of H₂ is indicated.

The features of the gas components of hydrogen, nitrogen, and argon are generally said to be as follows: Hydrogen (H₂) gas is high in thermal conductivity, so has the effect of improving the thermal conductivity of the gas as a whole. Further, it has an oxygen killing action (action of making oxygen swept up from atmosphere inert) when becoming plasma and bonds with the oxygen which is contained in the plasma to thereby have the effect of suppressing the formation of oxides. Basiclaly, hydrogen has a reducing action, that is, has the action of supressing oxidation, so together with an oxygen killing action has an effect of suppressing the formation of oxides. However, hydrogen has the action of inhibiting the stability of plasma and has the defect of making stable plasma difficult to obtain.

Nitrogen (N₂) gas is lighter in mass than Ar, so lowers the Reynold's number (Re). For this reason, it has the effect of facilitating formation of laminar plasma. Further, disassociated nitrogen, in the same way as hydrogen, has an oxygen killing action and has the effect of bonding with the oxygen in the plasma to suppress the formation of oxides.

Argon (Ar) has the effect of stabilizing the plasma. Basically, Ar is an element which is easily converted to plasma. At the time of initial ignition etc., if increasing the Ar, stable plasma is obtained. However, this is not only a relatively heavy gas, but is also a rare gas, so is expensive.

In the past, it has been proposed to adjust the change in the gas composition to obtain a suitable formulation. For example, both PLT's 1 and 2 propose to make the amount of Ar 50% or more and mix one or both of H₂ and N₂ into this amount of Ar. They propose to add H₂: 5 to 40% and N₂: 20 to 50%. This is because the stress is placed on the effect of Ar on stabilization of plasma and it is expected that the thermal conductivity coefficient etc. will be raised. However, in the past, there was no knowledge regarding hydrogen as an element obstructing plasma stabilization. The effect of not only not adding hydrogen, but also adding only a fine amount of hydrogen had not yet been verified. The inventors took note of this and evaluated the effect of no addition of hydrogen and addition of a fine amount of hydrogen.

The gas flow rate depends on the specifications of the plasma gun, but in the present embodment was 24 liter/min. Further, for the plasma gun, the above-mentioned cascade type plasma gun (see FIG. 6) was used. However, in the experiments, no side shield was used. Furthermore, anode gas (B in FIG. 6) was not used. The plasma working gas was entirely supplied form the cathode side as cathode gas (A in FIG. 6). Due to this, the effects due to the type and model of the plasma gun were eliminated.

### Decrease of Defects by No Addition of Hydrogen or Addition of Fine Amount

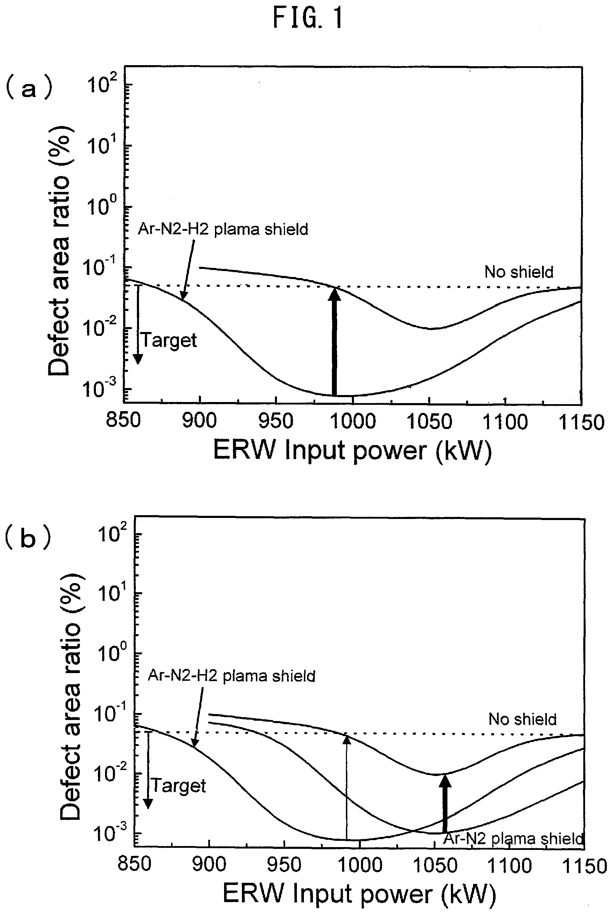

FIG. 1 shows the relationship between the amount of heat input and the defect rate (defect area ratio) at the time of electric resistance welding for each plasma working gas. Here, the "defect area ratio" means the area ratio of penetrators (weld defects due to oxides, below, unless otherwise indicated, simply called "defects") to the welding area. The defect area ratio can be measured by measuring the defect area at the time when fracturing a Charpy test piece with a notched bottom matched with the electric resistance weld part at a temperature where full ductile fracture occurs (150°C).

With a plasma shield by an Ar-N₂-H₂-based plasma working gas, since hydrogen has a large thermal conductivity, there is an action as an auxiliary heat source. The suitable electric resistance welding heat input level shifts to the low input side. As a result, the suitable amount of heat input in electric resistance welding giving the minimal number of defects becomes 1000 kW or so. On the other hand, with an Ar-N₂-based plasma shield using a plasma working gas to which hydrogen is not added, the heat input becomes greater than when adding hydrogen. The suitable amount of heat input becomes 1050 kW or so. The inventors confirmed that the number of defects here which is the minimal value is not much different from the case of adding hydrogen. Further, it was confirmed that the suitable amount of heat input in shield-less (unshielded) welding was the same level (1050 kW or so) as the one in the case of using Ar-N₂-based gas to which hydrogen is not added.

Electric resistance welded steel pipe is continuously produced, but sometimes, due to some sort of factor in the process thereof, the steel pipe rolls and the plasma shifts from the weld part. At this time, the weld part becomes a state with no shield (unshielded state) and numerous defects in which the oxygen in the atmosphere is swept up occur. If explained by FIG. 1, if the plasma shield by the Ar-N₂-H₂-based plasma working gas is removed, since the amount of heat input does not change, the defect area ratio increases up to the unshielded level (No sealed) which is located immediately above thereof. In FIG. 1, it increases by about two orders of magnitude (100X). Further, since unshielded, there is no effect from the plasma as an auxiliary heat source, the amount of heat input becomes insufficient, and cold welds or other weld defects are caused.

On the other hand, even with plasma shield using Ar-N₂-based plasma working gas, if becoming unshielded in state, the defects increase. However, the increase in defects is kept to one order of magnitude (10X) or so. Further, the amount of heat input is of the same extent, so cold welds and other weld defects due to insufficient heat input do not easily occur. For this reason, even if the shield shifts from the weld part resulting in the unshielded state, it was confirmed that the increase in the number of defects became remarkably smaller compared with the Ar-N₂-H₂ system to which hydrogen is added. That is, the Ar-N₂-based plasma working gas to which hydrogen is not added is said to be high in ability to handle fluctuations in operation. In the case of an Ar-N₂ system to which hydrogen is not added, even if changing the ratios of composition of Ar and N₂, there was no particular change. This is believed to be because the action of hydrogen as an auxiliary heat source has an effect on the determination of the suitable amount of heat input.

Note that, while not shown, it was confirmed that as the amount of addition of H₂ increases in the Ar-N₂-H₂-based plasma working gas, the amount of heat input shifts to the decreasing side. The optimal amount of weld heat input giving the minimal number of defects in the case of Ar-N₂-based plasma working gas to which hydrogen is not added becomes somewhat larger than the optimal amount of weld heat input giving the minimal number of defects in the case of no shielding. Therefore, while slight as well, by adding H₂ to match a suitable amount of heat input, if disturbances in operation cause an unshielded state, it is possible to keep the increase in defects to the minimum. When the inventors checked this in the experiments, the suitable amount of heat input when adding H₂ in 1% substantially matched the suitable amount of heat input in the case of the unshielded state. By adding H₂ in 1%, the effect of suppression of formation of defects at the time of the unshielded state becomes the maximum. If adding over 1%, not only is the effect reduced, but also the other effects which are explained below cannot be obtained, so the addition of H₂ is limited to 1% or less.

### Stabilization of Plasma by Not Adding Hydrogen

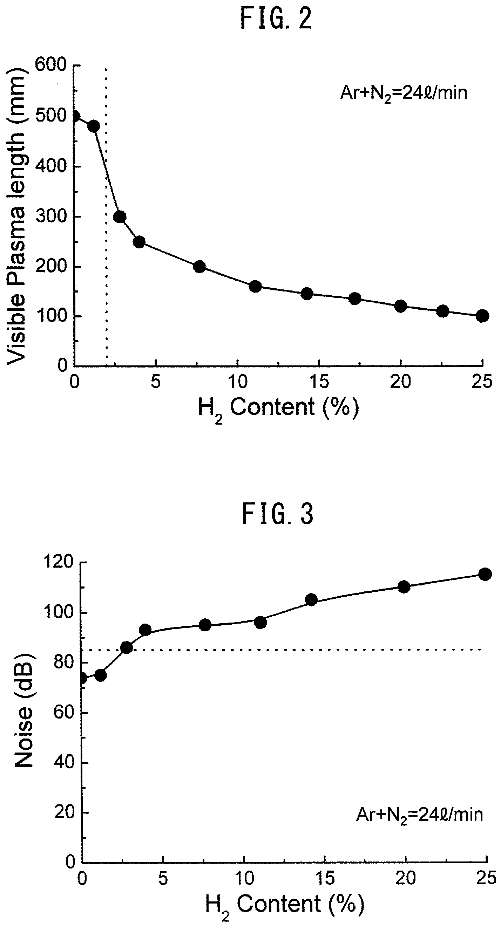

The stabilization of plasma can be evaluated by the length of the laminar plasma (laminar flow flame length of plasma). Of course, a longer plasma length means better stability of the plasma. In welding of electric resistance welded steel pipe, from the relationship of the layout of equipment, as long as possible a flame length and as stable as possible a flame length are demanded. FIG. 2 shows the relationship of the amount of addition of hydrogen gas (vol%) and the plasma length. The plasma length was measured visually with a black curtain as the backdrop.

As explained above, hydrogen obstructs the stabilization of plasma. In the past, it had been considered that if 50% or less, the plasma would not be affected too much (PLT's 1 and 2). However, the inventors analyzed the effects of addition of hydrogen in detail and as a result confirmed the relationship that if the amount of hydrogen increases, the plasma length becomes smaller. That is, unlike the conventional thinking up to now, there is an effect of hydrogen in obstructing the stabilization of plasma even when the amount of addition of hydrogen is less than 50%.

Furthermore, the inventors discovered that if setting the amount of addition of hydrogen (H₂) at 5% or less, the plasma length becomes much longer. As will be understood from FIG. 2, when the hydrogen content is at the 20% level, the plasma length is about 100 mm, but when the hydrogen content is 5%, it is rapidly improved to 200 mm or so and when further the hydrogen content is 1%, it is improved to 500 mm or so. Conversely, if the H₂ content exceeds 1%, the plasma remarkably degrades and the plasma length becomes shorter. With the recent longer flame laminar plasma, this degradation becomes even more of a problem. Therefore, to obtain stable plasma, overturning the conventional thinking of persons skilled in the art, the inventors discovered that it is necessary to make the gas become a system which does not contain H₂ or to make the gas become a system which even if containing H₂, restricts H₂ to 1% or less. Preferably, it is restricted to 0.5% or less. More preferably, it is restricted to 0.2% or less.

Further, Table 2 shows the measured values of the ratios of Ar and N₂ in the case of not adding hydrogen, that is, Ar-N₂-based gas, and the plasma length. The plasma length becomes an extremely large value between Ar:N₂=30%:70% and Ar:N₂=10%:90%. If in this range, it was confirmed that a plasma length of 500 mm can be secured. Further, if N₂ is 60% or more, it was confirmed that a plasma length of 480 mm or more could be secured. On the other hand, with the Ar:N₂=55%:45% which was proposed in the prior art, the effect of formation of a laminar flow is not obtained too much or the plasma length becomes a short 465 mm. This is believed because if the Ar is decreased, it becomes harder to obtain the effect of stabilization of plasma and a decrease of N₂ makes the Reynold's number larger and obstructs formation of a laminar flow. It is learned that for the lengthening of the plasma length due to the laminar flow, the effect of nitrogen (N₂) is highly effective.

**Table 2**

| Ar (vol%) | N₂ (vol%) | Plasma length (mm) |
|---|---|---|
| 56 | 44 | 300 |
| 33 | 67 | 420 |
| 22 | 78 | 480 |
| 11 | 89 | 520 |
| 5 | 95 | 480 |

### Reduction in Noise Level Due to Decrease in Amount of Addition of Hydrogen

Next, the noise level is evaluated. FIG. 3 shows the relationship between the measurement value of the noise level (dB) at 1 m from the plasma gun and the content of addition of hydrogen in the plasma working gas. It is clear that there is a positive correlation between the content of addition of hydrogen and noise. Analyzing this in further detail, it was learned that by making the amount of addition of H₂ 5% or less, the noise level remarkably decreases. The trend in decrease in noise level becomes saturated at an amount of addition of hydrogen of 1% or less. The inventors confirmed that the noise level becomes substantially the same as the case of no addition of hydrogen. In the present embodiment, the inventors confirmed that if the amount of addition of hydrogen is 1% or less, the noise becomes 75 dB or less. This causes a remarkable improvement in the work environment and is an extremely useful effect in industry. Note that, with Ar-N₂-based gas with no hydrogen added, no difference in noise due to the differences in composition could be confirmed.

### Improvement of Lifetime of Plasma Gun by Reduction of Amount of Addition of Hydrogen

Next, the inventors checked the lifetime of the plasma gun as the part which is most susceptible to thermal load, in particular the anode. For the lifetime, the replacement period of the anode part of the plasma gun was used as an indicator. In an Ar-N₂-H₂-based plasma working gas, as explained above, the hydrogen thermal conductivity is large, so the thermal load which is received by the plasma gun which the plasma working gas touches also increases along with the increase in the amount of addition of hydrogen. This leads to a drop in the lifetime of the plasma gun. Conversely, if reducing the amount of addition of hydrogen, the thermal load of the plasma gun is decreased. This is believed to lead to extension of the lifetime of the plasma gun. It is true that there is a clear trend toward a decline in lifetime due to the addition of hydrogen, but when an amount of addition of hydrogen is at level of 8 to 15, there is no change in the trend toward degradation of the anode parts. However, what should be noted is the fact that with an amount of addition of hydrogen of 5% or less, the lifetime of anode parts remarkably increases. It is guessed that along with the decrease in the hydrogen content, the thermal conductivity falls and the thermal load tends to lighten and that this may be an effect due to stabilization of the plasma. It could be confirmed that with an amount of addition of hydrogen of 1% or less, the lifetime becomes similar to that in the case of not adding hydrogen. From the viewpoint of the lifetime of the plasma gun, it is learned that it is preferable to not add hydrogen or to limit it to 1% or less even if including hydrogen. Note that, with Ar-N₂-based gas to which hydrogen is not added, no difference in the lifetime of the plasma gun due to differences in the composition could be confirmed.

### Overall Evaluation of Hydrogen Content at Plasma Shield

Summarized from the above findings, by not adding hydrogen to the Ar-N₂-based gas,
(a) It is possible to suppress the increase in defects and possible to secure a likelihood in production even when disturbances in the production of electric resistance welded steel pipe cause the shield to shift from the weld part to unshielding.
(b) It is possible for the plasma to greatly stabilize and to obtain a laminar flow and long plasma and possible to obtain a stable shield effect. Not only that, a likelihood in facilities can be secured.
(c) Furthermore, by making N₂ 60% or more, it becomes easier to make a laminar flow of the plasma and the stability of the plasma is improved. Preferably the N₂ content may be made 70% to 90%.
(d) It is possible to make the noise level from the plasma gun 80 dB or less or decrease the noise level by about 40 dB compared with the past and possible to contribute to remarkable improvement of the work environment on the manufacturing floor.
(e) The lifetime of the plasma gun, in particular the anode parts, is extended to 10 to 100 times that of the past, so stable operation of the facilities, lightening of the maintenance load, improvement of the operating rate, and other effects can be obtained.
(f) Further, even if adding hydrogen, by keeping the addition of hydrogen to 1% or less, it is possible to obtain the effect of suppression of the increase of defects even if disturbances during operation cause an unshielded state. Not only that, regarding the other effect than the above-mentioned effect, it is possible to obtain substantially equal effects to the effect in the case of not adding hydrogen. From this, even when adding hydrogen, it should be limited to 1% or less. Preferably, it may be limited to 0.5% or less, more preferably 0.2% or less.

### Second Embodiment

Next, the above-mentioned cascade type plasma gun (see FIG. 6) was used to supply plasma working gas divided into cathode gas and anode gas. Further, while the same cascade type, the plasma gun of which a plasma diameter is 25 mm was also used for welding. Table 3 shows the types and flow rates of the cathode gas and anode gas.

**Table 3. Gas Flow Rate (liters/min)**

| | Cathode gas | | | | Anode gas | Total gas flow rate |
|---|---|---|---|---|---|---|
| | N₂ | Ar | H₂ | Total flow rate | Ar | |
| φ18 mm | 20 | 3 | 0 | 23 | 2 | 25 |
| | 20 | 3 | 0.2 | 23.2 | 2 | 25.2 |
| | 13 | 0 | 0 | 13 | 2 | 15 |
| | 13 | 0 | 0.1 | 13.1 | 2 | 15.1 |
| φ25 mm | 23 | 4 | 0 | 27 | 4 | 31 |
| | 23 | 4 | 0.3 | 27.3 | 4 | 31.3 |
| | 15 | 0 | 0 | 15 | 4 | 19 |
| | 15 | 0 | 0.1 | 15.1 | 4 | 19.1 |

It is already known that the difference in caliber of the plasma gun has an effect on the plasma diameter, while the difference in the gas flow rate of the plasma working gas has an effect on the plasma length. After considering this, the plasma working gas was used as the plasma shield for electric resistance welding. The conditions for production of electric resistance welded steel pipe are the same as the first embodiment. As a result, the effect on the welding of the electric resistance welded steel pipe did not become a problem no matter what the gas flow rate. The results were similar to the first embodiment. Further, even in terms of the effects of the addition of hydrogen at the time of a small gas flow rate at the different calibers, in the case of addition of 1% or less, while the plasma length decreases slightly (by length ratio, about 5%), in the same way as the case of not adding hydrogen, there was no problem in weldability of the electric resistance welded steel pipe.

From the above, it was confirmed that, without the effect of the caliber of the plasma gun or the gas flow rate, by not adding hydrogen in the plasma working gas or by limiting hydrogen to 1% or less even if adding hydrogen in the plasma working gas, it is possible to obtain the high adaptability to fluctuations in operation in welding electric resistance welded steel pipe as explained above and plasma stability and other effects.

Further, the anode gas may be made Ar gas which has a plasma stabilizing effect. The flow rate may be made 5 to 30% of the plasma working gas flow rate as a whole. In the case of 5% or less, the effect of Ar to stabilize the plasma is not obtained. Further, this is because if supplying 30% or more, the plasma working gas between the cathode and the anode becomes insufficient and it becomes difficult to stably obtain plasma of a long laminar flow flame. While repeating ourselves, the present invention is not limited to the above-mentioned embodiments and can be applied to any plasma gun. It can also be employed for any electric resistance welded steel pipe production apparatus which uses plasma for shielding.

### Industrial Applicability

The present invention can be used in the production of electric resistance welded steel pipe using the plasma shield. Further, this can be applied to not only production of electric resistance welded steel pipe, but also welding of steel sheet using the plasma shield.

### Reference Signs List

1 cathode (cathode assembly),
11 (cathode) main body
12 cathode,
2 pilot member,
3 cascade,
3A, 3B, 3C, 3D, 3E cascade member,
4 anode,
6 side shield module
7 plasma gun cover
100 steel sheet (steel sheet formed into tubular shape),
101 butt end faces,
200 welding apparatus for electric resistance welded steel pipe,
201 squeeze roll,
210 top roll,
220 workcoil,
221 air knife,
A cathode gas (plasma working gas),
B anode gas (plasma working gas),
C plasma
D plasma
E side shield gas
F transport direction of steel sheet,
K electric resistance welded steel pipe
T plasma gun,

## Claims

1. A method for producing plasma-shielded electric resistance welded steel pipe which comprises, during forming steel sheet into a tubular shape and welding butt end faces of the steel sheet, applying voltage to plasma working gas which is supplied between a cathode and anode of a plasma gun to generate plasma and shielding a vicinity of a weld part using the plasma,
wherein the components of said plasma working gas are, by vol%, N₂: 70% to 90% and a balance of Ar and unavoidable impurities.

2. The method for producing plasma-shielded electric resistance welded steel pipe according to claim 1,
wherein said plasma working gas further contains H₂ in 1 vol% or less.

3. The method for producing plasma-shielded electric resistance welded steel pipe according to claim 1,
wherein said plasma is a laminar flow.

4. The method for producing plasma-shielded electric resistance welded steel pipe according to claim 2,
wherein said plasma is a laminar flow.

5. The method for producing plasma-shielded electric resistance welded steel pipe according to any one of claims 1 to 4,
wherein said plasma working gas comprises a cathode gas which is supplied from a cathode side and an anode gas which is supplied from an anode side.

6. The method for producing plasma-shielded electric resistance welded steel pipe according to claim 5,
wherein components of said anode gas are Ar and unavoidable impurities.

7. The method for producing plasma-shielded electric resistance welded steel pipe according to claim 5,
wherein gas flow rate of said anode gas is 5 to 30% of the gas flow rate of said plasma working gas.

8. The method for producing plasma-shielded electric resistance welded steel pipe according to claim 6,
wherein the gas flow rate of said anode gas is 5 to 30% of gas flow rate of said plasma working gas.

9. The method for producing plasma-shielded electric resistance welded steel pipe according to claim 5,
wherein gas flow rate of said cathode gas is 8 liter/min to 30 liter/min.

10. The method for producing plasma-shielded electric resistance welded steel pipe according to claim 6,
wherein gas flow rate of said cathode gas is 8 liter/min to 30 liter/min.

## Patentansprüche

1. Verfahren zum Herstellen eines plasmaabgeschirmten widerstandsgeschweißten Stahlrohrs, das während des Stahlblechformens zu einer Röhrenform und des Schweißens der stumpfen Endflächen des Stahlblechs aufweist: Anlegen einer Spannung an ein Plasmaarbeitsgas, das zwischen einer Kathode und Anode einer Plasmakanone zugeführt wird, um ein Plasma zu erzeugen, und Abschirmen einer Umgebung eines Schweißteils mittels des Plasmas,
wobei die Komponenten des Plasmaarbeitsgases in Vol.-% betragen: N₂: 70% bis 90% und ein Rest Ar und unvermeidliche Verunreinigungen.

2. Verfahren zum Herstellen eines plasmaabgeschirmten widerstandsgeschweißten Stahlrohrs nach Anspruch 1,
wobei das Plasmaarbeitsgas ferner 1 Vol.-% oder weniger H₂ enthält.

3. Verfahren zum Herstellen eines plasmaabgeschirmten widerstandsgeschweißten Stahlrohrs nach Anspruch 1, wobei das Plasma eine laminare Strömung ist.

4. Verfahren zum Herstellen eines plasmaabgeschirmten widerstandsgeschweißten Stahlrohrs nach Anspruch 2, wobei das Plasma eine laminare Strömung ist.

5. Verfahren zum Herstellen eines plasmaabgeschirmten widerstandsgeschweißten Stahlrohrs nach einem der Ansprüche 1 bis 4,
wobei das Plasmaarbeitsgas ein Kathodengas, das von einer Kathodenseite zugeführt wird, und ein Anodengas aufweist, das von einer Anodenseite zugeführt wird.

6. Verfahren zum Herstellen eines plasmaabgeschirmten widerstandsgeschweißten Stahlrohrs nach Anspruch 5,
wobei die Komponenten des Anodengases Ar und unvermeidliche Verunreinigungen sind.

7. Verfahren zum Herstellen eines plasmaabgeschirmten widerstandsgeschweißten Stahlrohrs nach Anspruch 5, wobei
die Gasdurchflussmenge des Anodengases 5 bis 30% der Gasdurchflussmenge des Plasmaarbeitsgases beträgt.

8. Verfahren zum Herstellen eines plasmaabgeschirmten widerstandsgeschweißten Stahlrohrs nach Anspruch 6, wobei
die Gasdurchflussmenge des Anodengases 5 bis 30% der Gasdurchflussmenge des Plasmaarbeitsgases beträgt.

9. Verfahren zum Herstellen eines plasmaabgeschirmten widerstandsgeschweißten Stahlrohrs nach Anspruch 5, wobei
die Gasdurchflussmenge des Kathodengases 8 Liter/min bis 30 Liter/min beträgt.

10. Verfahren zum Herstellen eines plasmaabgeschirmten widerstandsgeschweißten Stahlrohrs nach Anspruch 6, wobei
die Gasdurchflussmenge des Kathodengases 8 Liter/min bis 30 Liter/min beträgt.

## Revendications

1. Procédé de production d'un tube d'acier soudé par résistance électrique à protection plasma, comprenant, pendant le formage tubulaire de la feuille d'acier et le soudage des faces d'extrémité de la feuille d'acier, l'application d'une tension au gaz de travail de plasma amené entre une cathode et une anode d'un pistolet à plasma pour générer un plasma et la protection de l'environnement de la partie soudée au moyen du plasma, les composants du gaz de travail de plasma étant, en pourcentage volumiques, N₂ : de 70 % à 90 % et le reste étant de l'Ar et des impuretés inévitables.

2. Procédé de production d'un tube d'acier soudé par résistance électrique à protection plasma selon la revendication 1, où le gaz de travail de plasma contient en outre de l'H₂ en pourcentage volumique inférieur ou égal à 1 %.

3. Procédé de production d'un tube d'acier soudé par résistance électrique à protection plasma selon la revendication 1, où le plasma est un flux laminaire.

4. Procédé de production d'un tube d'acier soudé par résistance électrique à protection plasma selon la revendication 2, où le plasma est un flux laminaire.

5. Procédé de production d'un tube d'acier soudé par résistance électrique à protection plasma selon l'une des revendications 1 à 4, où le gaz de travail de plasma comprend un gaz de cathode amené depuis un côté de cathode, et un gaz d'anode amené depuis un côté d'anode.

6. Procédé de production d'un tube d'acier soudé par résistance électrique à protection plasma selon la revendication 5, où les composants du gaz d'anode sont l'Ar et des impuretés inévitables.

7. Procédé de production d'un tube d'acier soudé par résistance électrique à protection plasma selon la revendication 5,
où le débit du gaz d'anode représente de 5 à 30 % du débit du gaz de travail de plasma.

8. Procédé de production d'un tube d'acier soudé par résistance électrique à protection plasma selon la revendication 6,
où le débit du gaz d'anode représente de 5 à 30 % du débit du gaz de travail de plasma.

9. Procédé de production d'un tube d'acier soudé par résistance électrique à protection plasma selon la revendication 5,
où le débit du gaz de cathode est compris entre 8 l/min et 30 l/min.

10. Procédé de production d'un tube d'acier soudé par résistance électrique à protection plasma selon la revendication 6,
où le débit du gaz de cathode est compris entre 8 l/min et 30 l/min.
